# EUROPEAN PATENT APPLICATION

(11) **EP 0 574 970 A2**
(43) Date of publication of application: **22.12.1993**
(21) Application number: 93201487.1
(22) Date of filing: 25.05.1993
(51) Int. Cl.: B65D 71/00, B65D 71/04, B65D 85/20

(54) **Bundling package for the transport of rigid elongate objects**

(30) Priority: 18.06.1992 IT MI921506
(71) Applicant: ALUMIX S.p.A., I-00144 Roma (IT)
(72) Inventor: Cavallaro, Sergio, I-00125 Roma (IT)
(74) Representative: Perani, Aurelio

(57) **Abstract**

An industrial package for generic rod-shaped bodies (2) and particularly sections of extruded aluminium, comprises at least one pair of supporting crosspieces (5) whereon the bodies lie gathered in a substantially bundle configuration, at least one pair of shims (7) associated with said crosspieces (5) peripherally to the bundle, and at least one pair of hoops (10) passing around the rod-shaped bodies, the crosspieces (5) and the shims (7). Advantageously, the crosspieces and shims are made of aluminium section thereby resulting light and sturdy as well as conveniently to re-usable in other packages.

## Description

This invention relates to an industrial package for rod-shaped bodies in general, and particularly for extruded aluminium sections, comprising at least one pair of supporting crosspieces on which said bodies lie gathered in a substantially bundle configuration, at least one pair of shims associated with said crosspieces peripherally to said bundle, and at least a pair of hoops wrapped around said rod-shaped bodies, crosspieces, and shims.

The package just mentioned above, is already known and widely used especially for transporting and handling semi-finished sections to subsequent processing steps, e.g. final assembling steps as are provided in the manufacture of metal door and window frames and the like.

In a more general way, such packages may be utilized for handling sections to be transported either within industrial plants, e.g. using standard lift trucks, or for shipment to remote sites from their manufacturing plant, like the peripheral units of a sale network.

To rationalize such handling on an industrial scale, it is necessary that the package above be light, easy to handle with cranes or similar means for moving goods over the ground, as well as sturdy and economical.

According to prior art techniques particularly directed to the package of extruded aluminium sections, the latter are gathered in bundles, lying side-by-side and combining them in such a manner that their cross-sections interfit to conveniently provide a more compact package for a given gross weight.

The resulting bundle is laid onto appropriate wooden crosspieces and tightened using a pair of metal hoops. To avoid damaging the package under the hoop pressure, it is a common practice to place a pair of wooden shims on the upper side of the bundle, at remote locations from the crosspieces. Both shims and crosspieces are clamped against the bundle of sections by the hoops wrapped therearound.

The crosspieces and shims employed till now were made of wood, as mentioned; this material, however, may cause problems which restrict the range of application of packages incorporating them.

For instance, it will be easily appreciated that when stored in damp ambients or in any event they find themselves in contact with water, the crosspieces and shims become damaged, and by failing to perform their intended function, they imperil the package integrity.

Nevertheless, no valid alternatives have been found heretofore to the use of wood, since wood is such a light, inexpensive, and easy to supply material that is still preferable to any other attempted substitutes.

It is the object of this invention to provide an industrial package for generic rod-shaped objects, and particularly sections of extruded aluminium, having such construction and performance features as to overcome the drawbacks previously mentioned in connection with the prior art.

This object is achieved by a package as mentioned in the foregoing and characterized in the appended claims.

Further features and the advantages of this invention will become apparent from the following description of a non-limitative exemple of embodiment thereof, given with reference to the accompanying drawings, wherein:
Figure 1 is a cutaway, perspective view from below of a package according to the invention;

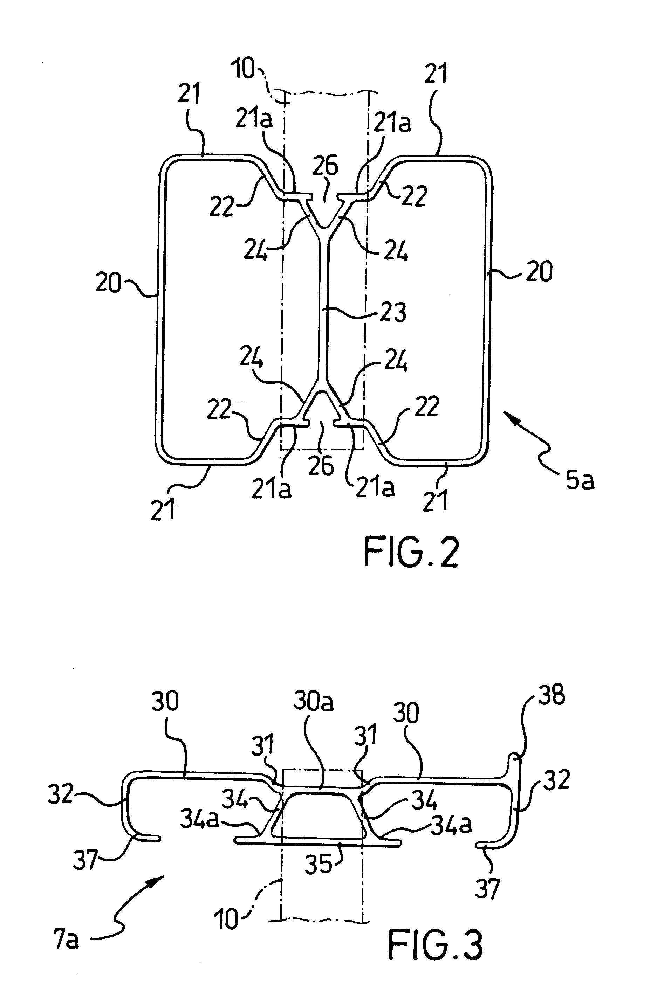

Figure 2 is a cross-sectional view of a first detail of the package shown in Figure 1;
Figure 3 is a cross-sectional view of a second detail of the package in Figure 1.

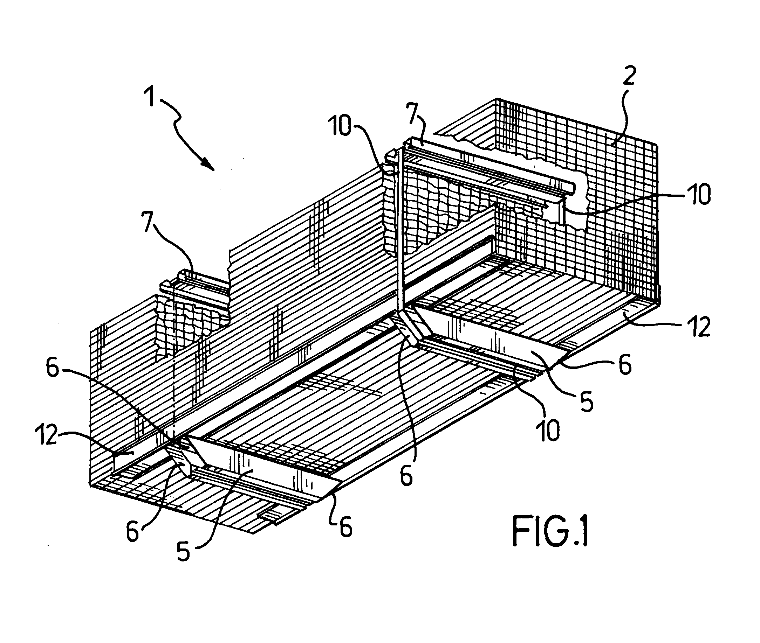

With reference to the drawing views, and in particular to Figure 1, a package according to the invention, intended for packing a plurality of extruded aluminium sections 2, is generally shown at 1 as it would show to an observer standing below it during a package hoisting step of its handling cycle. In the figure the sections 2 are, for convenience of illustration, of the box-type, that is with a rectangular cross-sectional shape, whereby they can be readily laid side-by-side along longitudinal directions and easily stacked upon one another into a square cross-section bundled configuration; it will be later appreciated that their shape may be other than that shown without departing from the scope of this invention.

The package of this invention includes a pair of supporting crosspieces 5 and a pair of upper shims 7; specifically, the bundle of sections 2 lies onto the supporting crosspieces 5 and the shims 7 are arranged to overlie the sections, each aligned to a respective the crosspieces.

The package 1 also includes two metal hoops 10 passed around the bundle outside the shims 7 and the crosspieces 5, as explained hereinafter.

Located at those bars 2 in the bundle which lie along the bundle corners and rest on the crosspieces 5 are two stringers 12 having an "L-shaped" cross-section; the stringers extend along said corners of the bundle formed by sections 2 and provide convenient reinforcement for handling the package, in a manner to be described.

In a preferred embodiment, the crosspieces 5 are formed from box-type sections of extruded aluminium having respective opposite ends 6 which are cut along a slanted frontal plane; in addition, the crosspieces 5 have a substantially square cross-section 5a comprising two pairs of sides, 20 and 21, opposite to each other and joined at their respective ends.

The sides 21 are formed with a lowered central portion 21 a of their longitudinal extension through inclined walls 22.

Between said central portions 21 a there extends a dividing baffle 23 effective to stiffen the cross-section 5a; advantageously, that baffle 23 is joined to the central portions 21 a by two opposite "V-shaped" ends. Further, the two central portions 21 a to which said ends 24 of the baffle 23 are connected have an open portion 26 located in longitudinal continuation of the baffle 23.

The shims 7 of this invention are, similarly to the crosspieces 5 just described, sections of extruded aluminium; specifically, their cross-section 7a comprises a major side 30 provided, on two opposite ends, with two fins 32 extending perpendicularly therefrom.

The major side 30 comprises, similarly to the sides 21 of the previously described cross-section 5a, a central portion 30a which is joined by means of two ribs 31. At the location of that central portion 30a, there extend, from the same part of the side 30 as the two fins 32, two walls 34. In particular, the latter diverge from the side 30 toward a second short side 35 of the shim cross-section; this short side 35 has a straight longitudinal extension and lies parallel to the major one.

On the fins 32 of the shims 7 there are respective lugs 37 which extend toward said short side 35 in alignment therewith along its straight extension.

In addition, the shims 7 are advantageously provided, at one of the fins 32, with a fin extension appendix 38 lying perpendicular to the major side 30.

In the package of this invention, the crosspieces 5 and shims 7 are laid with one of the sides 21 and the short side 35, respectively, facing the packed sections 2; also, each shim locates opposite with respect to the sections 2, to its corresponding crosspiece 5.

The hoops 10 pass outside each corresponding shim and crosspiece, through respective ones of the central portions 21 a and 30a.

The package of this invention has enhanced features of lightness and strength to withstand the severe conditions of its use as previously described.

These results are achieved thanks to important factors among which there is the use of aluminium. This material has, in fact, fairly low specific weight combined with good mechanical properties, and is highly resistant to corrosion and environmental attack under normal conditions of use of the package.

It should also be emphasized that the strength of the crosspieces and the shims is enhanced by their design. With reference to the crosspieces 5, in fact, the dividing baffle 23 will stiffen especially the central portions 21 a, which are the most heavily stressed areas by the hoop 10 tension, thereby avoiding the risk of breakage.

It should be further emphasized that the peculiar design of the "V-shaped" ends of the baffle 23 and the open portion 26 in the central portions 21 a are help to lighten the crosspiece as a whole although keeping unaltered its full strength. In fact, in view of the type of stress to which each crosspiece is subjected, it matters that the baffle 23 be prevented from bending under combined bending and compressive stress exerted at its ends, due to the hoop tension.

The "V-shape" of the ends 24 allows, additionally to improved spreading of the stress from the hoop, decreased span of the baffle 23, which is of special interest in imparting the baffle with optimum dimensions to resist to the aforesaid combined stresses.

As for the hoops 7, it should be noted that their cross-section 7a has been much lightened by making it with a peripherally open shape at the locations of the fins 32 and the short side 35.

An additional advantage of the package according to this invention is that it allows the bundles of packed sections 2 to be stacked upon one another; the extension appendix 38 is specially useful in this direction since it advantageously provides, in a stack of packages, a lateral abutment for the crosspiece of an overlying package arranged to rest on the corresponding shim of an underlying package in the stack.

Also noteworthy of the inventive package is, further to the suitability of stacking just observed, its facility to be handled. In fact, the stringers provided along the bottom corners of the packed bundle of sections 2 will stiffen those corners to prevent possible damage that could occur while handling the packages by means of lift trucks. Such stringers would be of equal usefulness in handling the packages with hoisting equipment such as, for example, cranes and slings.

Another noteworthy advantage of this invention is brought by a comparison with the prior art. Wooden crosspieces and shims actually can hardly be reclaimed because wood is easily damaged even after the first use; additionally, in the specific instance of extruded aluminium sections packages, the wood from the crosspieces and the shims is difficult to be worked by the user of the packed product for producing new shims and crosspieces which will be re-used in future packages. This is due to the fact that the user is generally, in actual practice, unprovided with wood processing machinery since this material is not related with that of the packed product for which he is surely equipped. It follows that the whole package, and especially the crosspieces and shims, are waste packing material.

On the other hand, the use of aluminium allows to do packages that, at least in the instance of the sections described in the previous embodiment, are consistent with the material of the packed product.

The user of the packed product will be presumably equipped, therefore, for working aluminium crosspieces and shims, so that the latter can be reused for new packages either directly or after a machining phase for changing their length dimensions.

In any case, where the shims and crosspieces cannot be reclaimed, such as because damaged during their use, the user may still recover part of their cost by reselling them as aluminium scrap together with swarf deriving from the packed product machining which he will presumably have to get rid of.

Thus, it cannot be excluded that the package of this invention may originate a change in the handling of certain products having shapes other than the aforementioned rod-shaped objects, possibly through a parallel system for managing and recovering used packages. In such a case, the package of this invention could have its shape modified from what has been illustrated in the previous example, without this affecting, nevertheless, the scope of this invention.

As a possible example of such modifications, someone could think of fastening the previously described stringers and crosspiece rigidly together to basically produce a pallet adapted for holding a load to be packed. In addition, it is apparent that the number and shape of the crosspieces and of the shims may also be changed to make the package better suited to different conditions of its use.

In the latter respect, it should be noted illustratively that the crosspieces may be shaped differently from those described above, e.g. in their part lying in the side of the rod-shaped objects, providing to those areas a slightly concave shape thereby to form a cradle support for said objects. Furthermore, the shims could be made different from straight in shape, e.g. arcuate, similar to certain centerings employed in other engineering sectors. Lastly, as an added variation to those just reviewed, the possibility should be considered of positioning a pair of shims laterally of the bundle of rod-shaped objects and omitting the shims on top of the bundle; it cannot be excluded that the last- mentioned solution may offer advantages over the previous ones where the packed load is to be restrained sideways.

All these and other possible variations, however, should be regarded as encompassed by the protection scope defined in the following claims.

## Claims

1. An industrial package for rod-shaped bodies (2) in general, and particularly for extruded aluminium sections, comprising at least one pair of supporting crosspieces (5) on which said bodies lie gathered in a substantially bundle configuration, at least one pair of shims (7) associated with said crosspieces (5) peripherally to said bundle, and at least one pair of hoops (10) wrapped around said rod-shaped bodies, crosspieces (5), and shims (7), characterized in that said crosspieces (5) and shims (7) are sections made of a light metal material.

2. A package according to Claim 1, characterized in that said crosspieces (5) are box-type sections having a substantially square cross-section (5a) with a dividing baffle (23) extending between a pair of opposite sides (21) of said cross-section (5a).

3. A crosspiece (5) for a package as claimed in Claim 2, characterized in that said pair of opposite sides (21) have a central portion (21 a) of their longitudinal extension which is lowered with respect to the rest of their longitudinal extension, and that said dividing baffle (23) extends between said lowered central portions (21a) to which it is connected by respective opposite "V-shaped" ends (24).

4. A package according to Claim 1, characterized in that said shims (7) are sections whose cross-section (7a) comprises a major side (30) having on opposite ends respective fins (32) extending perpendicularly therefrom, a short side (35) extending parallel to said major side (30), a pair of walls (34) extending between said major (30) and short side (30 and 35).

5. A shim (7) for a package as claimed in Claim 4, characterized in that said major side (30) comprises a central portion (30a) of its longitudinal extension which is lowered with respect to the rest of its longitudinal extension and wherefrom said walls (34) extend diverging from said central portion (30a) to said short side (35).

6. A shim (7) according to Claim 5, characterized in that it comprises an appendix (38) extending substantially perpendicularly to said major side (30), on the opposite part with respect to said fins (32).

7. An industrial package according to any of the preceding claims, characterized in that said shims (7) and crosspieces (5) are made of aluminium.
